# EUROPEAN PATENT SPECIFICATION

(11) **EP 2 862 615 B1**
(45) Date of publication and mention of the grant of the patent: **27.03.2019**
(21) Application number: 14189147.3
(22) Date of filing: 16.10.2014
(51) Int. Cl.: B01D 46/00, B01D 46/52, B29B 13/02, C09J 5/06, B05C 9/14, B05C 5/00

(54) **A hot melt glue dispenser device**
Heissklebstoff-Auftragvorrichtung
Distributeur d'adhésif chaud

(30) Priority: 18.10.2013 IT MI20131748
(43) Date of publication of application: 22.04.2015
(73) Proprietor: Bianchi, Enrico, 27025 Gambolo (Pavia) (IT); Bianchi, Maria Paola, 27025 Gambolo (Pavia) (IT)
(72) Inventor: Bianchi, Enrico, 27025 Gambolo (Pavia) (IT); Bianchi, Maria Paola, 27025 Gambolo (Pavia) (IT)
(74) Representative: Leihkauf, Steffen Falk

(56) References cited:
- GB-A- 904 945
- US-A- 2 708 278
- US-A- 2 762 716
- US-A- 2 972 670
- US-A- 3 377 012
- US-A- 4 804 110

## Description

### Field of the invention

The present invention relates to a melt glue dispenser device to melt and dispense such glue starting from a continuous wire of solid hot melt glue. The present invention also relates to a hot melt glue wire gluing machine, particularly for some manufacturing steps of pleated filtering media filters, comprising such dispenser device.

### Background of the art

In many different industrial fields, the need is felt to dispense in an automatic or semiautomatic manner a continuous or interrupted ribbon, of hot melt molten glue in the presence of a relative movement between a dispensing nozzle of such melt glue and an object to be treated, and vice versa.

The hot melt glue is a particular glue which exhibits the specific physical property to be in a solid state at room temperature, to be subsequently liquefied when it is heated above its melting point, to go then back to a solid state when its temperature goes back to the value of room temperature. In this manner, it is easily transportable and storable before use, since it is in the solid state, for example, in granules, or small bars, or in a coil of continuous wire wrapped in a roller, and it does not require special containers, while it becomes easily dispensable in the molten state, where it has such a viscosity as to distribute and adhere to surfaces that are also irregular, while maintaining some consistence such as to be self-standing in a cantilever manner along small lengths of projection, even in the molten state.

This property is particularly useful e in many fields, and particularly in the field of the production of pleated filtering media filters.

In such field, a continuous band of filtering media, for example in the form of a web or a sheet in a material suitable to be passed through by a flow of a fluid to be filtered through such filtering media, is folded in a "pleat", i.e., in a bellows or "zig-zag" shape. In other terms, the web in filtering media that extends along a main direction thereof, is folded along folding lines which are orthogonal to a main direction and mutually parallel, so that each portion of the of media, interposed between two adjacent folding lines, overlaps, on opposite sides thereof, the preceding and successive similar portion of folded media.

In such a manner, mutually alternated ridges and valleys are formed, at successive folding lines.

For a proper operation of the pleated filtering media, the ridges have to be locked at a predetermined mutual distance, hence at a predetermined pitch.

The above-mentioned property of the hot melt glue to maintain, even in the molten state, a certain consistency such as to be self-standing in a cantilevered manner along small lengths of projection, allows arranging of melt glue ribbon to connect the successive ridges, while such ridges are kept at a predetermined distance.

When the glue solidifies, it forms a bridge between the successive ridges, stabilizing them and keeping them at a predetermined distance.

The hot melt glue which is dispensed by a nozzle is used industrially also in other fields, as the field of gluing paper, fabrics, etc.

The machines for dispensing hot melt glue which are used in such field have a number of drawbacks.

First, such industrial machines use quite complex dispensing devices, which use glue in granules and not in a continuous wire, in which such glue in granules is inserted in a melter reservoir within which the glue is molten, and from which melt glue supply tubes run up to the dispensing nozzle. The molten glue passes within a volumetric pump, which pushes it along such tubes. This known technique necessarily requires heating and keeping at a temperature above the melting point many components of the plant, such as the melter reservoir, the supply tubes through the entire length thereof, and the volumetric pump.

In fact, if just one of these components ceases to be kept at a temperature above the melting point, the glue solidifies in such component and stops the operation of the whole plant. Due to this reason, such known solution requires the application of heater members which are distributed necessarily across the entire length of the plant, completely avoiding intermediate areas in which the melt glue could be cooled or loose heat.

Furthermore, such known solution involves a drawback to have to completely empty the melter reservoir of its contents in the case that a replacement of the type of glue or product to be dispensed is desired, therefore such known system involves a poor flexibility of adaptation to a replacement of the material to be dispensed.

Furthermore, possible temperature changes along the path of the melt glue could cause deposits of residues of combusted glue, forming incrustations which could be released and run along the melt glue path and obstruct the dispensing nozzle or damage the volumetric pump.

Furthermore, having to bring to melt the entire content of the reservoir requires long starting times.

These needs involve, in addition to a considerable energy and time consumption to heat the whole plant, the absence of adaptation flexibility of the plant to different processing operations, and quite high overall dimensions of the machine.

This involves high costs for transporting and handling the machine, for the installation and set-up, standard use thereof, intervention in the case of an interruption in the heating, standard maintenance.

Some attempts to overcome the above-mentioned drawbacks have been made, in other industrial fields, using a hot melt glue in wire form and concentrating the melting area in the proximity of the dispensing nozzle.

Such known attempts provide for the use of a machine comprising a support for a coil of hot melt glue in a wire form, and a guide tube, generally flexible, which begins in the proximity of the coil and is directly connected to a melter body which ends with a dispensing nozzle.

Such guide tube has to be long enough to cover the entire distance between the coil and the melter body. Means to push the solid glue wire into the guide tube are mounted far from the melter body so as to avoid the melting of the glue before it is inserted in the melter, which would generate an obstruction by solidification at the end of the operation. In fact, such means to push the wire are mounted in the machine in the proximity of the coil and upstream of the above-mentioned guide tube and far from the melter body.

These characteristics involve at least two severe drawbacks.

A first one of such drawbacks is that the pushing means mounted to the machine in the proximity of the coil have to be able to push the solid glue wire into a tube which is rather long up to the melter. Since also the solid glue wire introduced in such tube is rather long, the advancement thereof is hindered by considerable frictional forces, which requires the use of pushing means that are mounted on the machine, having considerable power and dimensions.
introduced in such tube is rather long, the advancement thereof is hindered by considerable frictional forces, which requires the use of pushing means that are mounted on the machine, having considerable power and dimensions.

A second drawback is given by the fact that such application requires a machine which is specifically sized to overcome these obstacles, hence, which is particularly expensive and bulky.

US 4 804 110 A relates to a dispenser for extruding a hot melt adhesive obtained by melting a rod of adhesive in a normally closed pressurized melting chamber. A seal is placed at the inlet and is cooled by a flow of air so as to maintain the shape of the rod and the seal, prevent its deformation, and inhibit the leakage of melted adhesive back through the seal. A movable section is provided for the melting chamber to absorb expansion of the melted adhesive and a sensor is used to inhibit feeding of the rod when the chambers section expands and enable feeding when it is in a contracted position.

US 2 972 670 A describes an apparatus for melting and feeding thermoplastic cement in rod form, in a device for dispensing molten cement to a portable hand-operated cement extruding gun.

GB 904 945 A describes a hand-held applying device for use with rod cement, comprising an electric motor, rod cement feeding means, a melting passage leading to a nozzle through which molten cement may be extruded, actuating means, and a valve at the nozzle, the device being so arranged that when it is in a ready-for-use condition the valve is in a closed condition and the feeding means does not operate to feed the rod cement, when the actuating means is operated the motor operates the feeding means to feed rod cement into the melting passage and the valve is allowed to open, and when the actuating means is released to return the device to its ready-for-use condition the feeding device ceases to feed rod cement, and the valve closes, so that no further cement extrudes through the nozzle.

US 2 708 278 A describes a lasting machine for lasting footwear, luggage, upholstery, and it is designed to apply an adhesive to the margin of the upper and/or to the insole, or equivalent element of a shoe, a step in the lasting operation.

US 3 377 012 A describes an apparatus for applying a coating of a fused material to an article, particularly to a portable gun-like apparatus in which an article to be coated with a fused material, such as solder, is inserted through a slotted diaphragm and immersed in a fused material reservoir mounted in a forward section of the gun.

Therefore, the need is felt to simplify the dispensing operation of a hot melt glue for industrial use, so that such operation is easily adaptable to several uses, and easily adaptable to different gluing machines, thereby simplifying the industrial layout.

### Summary of the invention

An object of the present invention is to devise and provide a hot melt glue dispenser device that allows meeting the above-mentioned needs and at least partially obviating the drawbacks set forth above with reference to the prior art.

Particularly, an object of the present invention is to provide a hot melt glue dispenser device that is autonomous with respect to the gluing machine to which it is mounted, and which is easily and quickly securable to such machine, avoiding modifying such machine.

Another object of the present invention is to provide a hot melt glue dispenser device, the operation of which is autonomous from a gluing machine to which it is mounted, and which allows being started and stopped, even repeatedly, in a short time, avoiding long pre-heating times.

Another object of the present invention is to provide a dispenser device that is compact and easily maneuverable.

A further object of the present invention is to provide a dispenser device which avoids needing long tubes for the supply of the solid glue wire between the coil and the melter body.

It is still another object of the present invention to provide a melter device that can be actuated non only continuously, but also in an interrupted manner, for example, by a sequence of dispensing and interruption steps, even very frequent and near to one another, avoiding having to maintain the glue at a temperature constantly above the melting point of the glue.

These and further objects and advantages are achieved by a dispenser according to claim 1. According to a general embodiment of the invention, a hot melt glue dispenser device for dispensing a melt glue wire, for example continuous or interrupted, starting from a solid glue wire, in particular continuous, that is fed in input to said dispenser device along a supply direction, comprising a melter body having a heated inner passage having an inlet for said solid glue wire, and an opposite outlet for said melt glue wire, said melter body having heater members to melt the solid glue wire along the path between said inlet and said outlet; and a motorized dragging mechanism having an inlet for said solid glue wire and an outlet for said solid glue wire, said dragging mechanism being suitable to apply a dragging force to said solid glue wire to push said solid glue wire towards said inner passage of said melter body.

The dispenser device comprises a connection structure, in particular a rigid connection structure, between said dragging mechanism and said melter body, so that said outlet of the dragging mechanism faces, and in particular is aligned to, said inlet of the melter body, in a spaced apart manner.

Such dispenser device also comprises a spacer member, for example, tubular, for example rigid, for the passage of the solid glue wire therein, interposed between said melter body and said dragging mechanism, having a first end connected to said outlet of the dragging mechanism and a second end connected to said inlet of the melter body.

The spacer member is made of a thermally insulating material so as to prevent the heat transferring from the melter body to the dragging mechanism.

The above-mentioned characteristics whereby both the melter body and the dragging mechanism are rigidly mutually connected, by the connection structure, so that the outlet of the dragging mechanism faces and, on particular, is aligned with said inlet of the melter body, and the presence of the spacer member, in particular rigid, interposed between the melter body and the dragging mechanism with a first end connected to the outlet of the dragging mechanism and a second end connected to the inlet of the melter body, allow producing the entire dispenser device in a single, independent and self-standing, autonomous, compact, easily maneuverable, replaceable, storable assembly, and which is applicable to any machine having a hold portion on which it can be mounted.

In other terms, the melter body and the dragging mechanism, when they are assembled, form a single body.

The fact that the spacer member is made of a thermally insulating material allows mounting the dragging mechanism at a distance quite close to the melter body avoiding to be subjected to the effects of the heating by the melter body, since the dragging mechanism is isolated from the melter body by virtue of the presence of the spacer member. Particularly, the melter body and the dragging mechanism can be mounted on the same rigid support.

The fact that the spacer member is made of a thermally insulating material allows avoiding that the hot melt glue wire melts therein.

In other terms, the hot melt glue wire melts only within the melter body, but it remains solid within the spacer member, avoiding to melt.

In other terms, such device according to the invention allows precisely separating the zone of melt glue wire from the zone of solid glue wire.

This allows avoiding a stopper effect that could be generated in a successive dispensing due to the solidification of a melt glue residue during the preceding dispensing, which subsequently solidifies.

In such a manner, such device allows a non-continuous actuation also, in particular having many interruptions and re-starts, with very quick re-start times.

Such a device allows obtaining a startup time, starting from cold machine, to full speed machine at in a time that is less than 4 minutes.

According to the invention the connection structure between the dragging mechanism and the melter body comprises, or is formed by, a structural bracket, in particular a single bracket, to which the melter body and the dragging mechanism are rigidly secured. In such a manner, a dispenser device is obtained, which is particularly robust, hence very resistant to the mechanical stresses and vibrations.

In accordance with a second embodiment, the connection structure between the dragging mechanism and the melter body is advantageously formed by the spacer member itself.

In such a case, the spacer member is configured to connect and rigidly and structurally support the melter body with respect to the dragging mechanism, avoiding a structural bracket to rigidly mutually connect the melter body and the dragging mechanism.

This embodiment allows obtaining a quite light-weighted structure of the dispenser device, suitable to be quickly handled, also by high accelerations, since by reducing the total mass of the dispenser, also the mechanical inertia forces are reduced, reacting in a more precise and reliable manner to the accelerations and direction changes of the motion of the dispenser device.

According to another aspect of the present invention, the above-mentioned objects and advantages are achieved by a gluing machine as described in claim 10, comprising at least one dispenser device as described above.

Further objects, solutions, and advantages are present in the embodiments claimed in the dependent claims.

### Brief description of the figures

Different embodiments of the invention will be now described by embodiment examples which are set forth only by way of illustrative, non-limiting example, with particular reference to the annexed figures, in which:

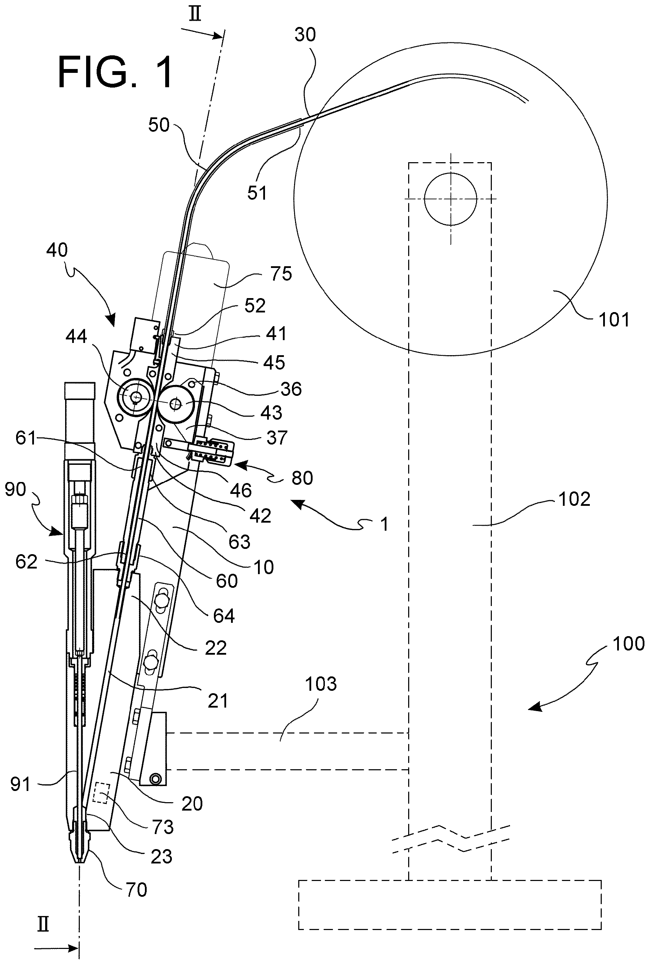

- Fig. 1 illustrates a longitudinal sectional view of a dispenser device according to the invention, by a longitudinal sectional plane passing along the inner passage of the melter member and through the rollers of the dragging mechanism;

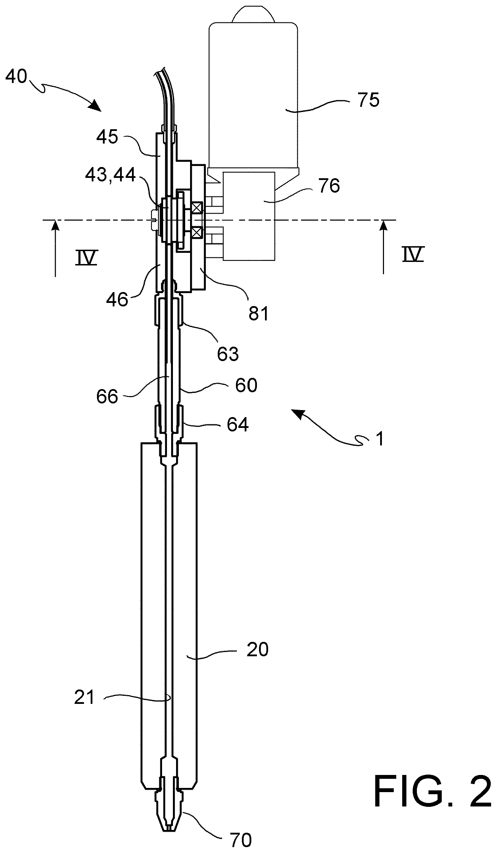

- Fig. 2 illustrates a sectional view of a dispenser device according to the invention, across a sectional plane II passing along the inner passage of the melter body, and orthogonal to the sectional plane of Fig. 1;

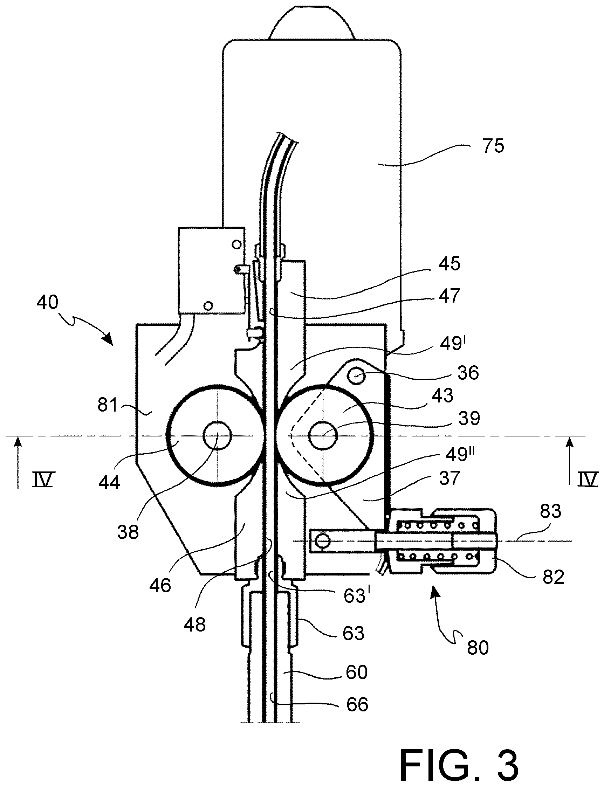

- Fig. 3 illustrates an enlarged sectional view of a detail of the dispenser of Fig. 1, comprising the dragging mechanism;

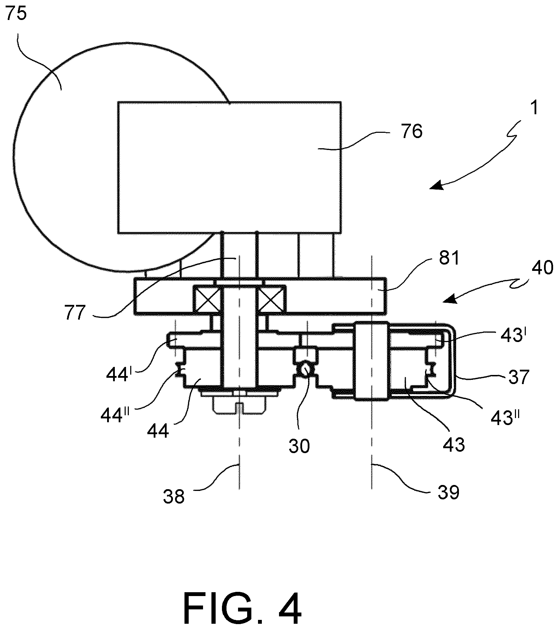

- Fig. 4 illustrates a sectional view of the dispenser device of Fig. 1 across a sectional plane passing through the axes of the rollers of the dragging mechanism;
- Figs. 5 and 6 show a gluing machine for pleated filtering media, comprising the dispenser device of Fig. 1;
- Fig. 7 shows the gluing machine of Figs. 5 and 6 in an orthogonal view, in which transversal translations means of such dispenser device are shown;
- Fig. 8 shows a gluing machine as having two dispenser devices as that one of Fig. 1, both transversally translatable with respect to the advancement of the filtering media.

### Description of some preferred embodiments

Herein below, reference will be made to the "advancement direction" to mean the direction in which the solid glue wire advances, from the dragging mechanism to the melter body.

By the term "solid glue wire" entering the dispenser device is meant a continuous wire wound on a coil, or a sequence of solid glue bars inserted in succession in the dispenser device, on particular in the dragging mechanism. The section of such solid glue wire can for example be circular with a preset diameter, or it can be a ribbon or a polygonal section, or other shapes of section.

By the term "melt glue wire" dispensed by the dispenser device is meant a wire having any transversal section, for example substantially circular or polygonal or star, or ribbon, or band.

With reference to the figures, a hot melt glue dispenser device for dispensing a continuous, or interrupted melt glue wire starting from a solid glue continuous wire that is fed in input to said dispenser device along a supply direction, is generally indicated by the reference 1.

The device 1 comprises a melter body 20 having a heated inner passage 21 having an inlet 22 for the solid glue wire 30, and an opposite outlet 23 for the melt glue wire.

The melter body 20 comprises heater members to melt the solid glue wire 30 along the path between the inlet 22 and the outlet 23.

Such heater members can be, for example, electric resistors, which are in particular arranged so as to uniformly heat the inner passage.

The inner passage 21 is, for example, a rectilinear hole, for example with a circular transversal section, ending at its opposite ends with the inlet 22 and the outlet 23.

The dispenser device 1 comprises a dragging mechanism 40, in particular motorized, having an inlet 41 for the insertion of the solid glue wire 30 and an outlet 42 for the exit of the solid glue wire 30.

The dragging mechanism 40 comprises an inner passage 47, 48 to make the solid glue wire 30 to pass therein, such passage extending between the inlet 41 and the outlet 42.

In accordance with an embodiment, such inner passage 47, 48 is, at least partially, a rectilinear duct.

The dragging mechanism 40 is configured to apply a dragging force to the solid glue wire 30 to push the solid glue wire 30 towards the inner passage 21 of the melter body 20.

The dispenser device 1 comprises a connection structure between the dragging mechanism 40 and the melter body 20, configured so that the outlet 42 of the dragging mechanism faces, and, in particular is aligned with the inlet 22 of the melter body, in a spaced apart manner.

In other terms the dragging mechanism 40 and the melter body 20 are mounted on the same connection structure. Particularly, the dragging mechanism 40 and the heater body are arranged at a preset distance from one another, for example, ranging between 20 mm and 300 mm, in particular ranging between 30 mm and 150 mm, in particular substantially equal to 80 mm. It has been found that such distances prevent transmitting, between the melter body and the dragging mechanism, an amount of heat such as to soften or melt the solid glue wire before reaching the melter body.

Such a connection structure (10, 60) is a rigid connection structure between the melter body (20) and the dragging mechanism (40).

In accordance with an embodiment, the connection structure (10, 60) is configured to prevent a relative movement between the dragging mechanism (40) and the melter body (20), and vice versa.

In accordance with an embodiment, the inner passage 21 of the melter body 20 and the inner passage 47, 48 of the dragging mechanism 40 are both rectilinear and mutually aligned. In other terms, they both extend along the same line, for example, the same straight line.

The dispenser device 1 comprises a spacer member 60, for example tubular, for example rigid, for the passage of the solid glue wire 30 therein.

Such a spacer member is interposed between the melter body 20 and the dragging mechanism 40, and it has a first end 61 thereof connected to the outlet 42 of the dragging mechanism 40, and a second end 62 thereof connected to the inlet 22 of the melter body 20.

The spacer member 60 is made of a thermally insulating material so as to prevent the heat transferring from the melter body 20 to the dragging mechanism 40.

The spacer member 60 has a length, measured in the direction of the distance between the dragging mechanism and the heater body, which is substantially equal to the distance between them, for example, ranging between 20 mm and 300 mm, particularly ranging between 30 mm and 150 mm, in particular substantially equal to 80 mm.

It has been found that for a length substantially equal to 80 mm, the spacer member exhibits high characteristics of rigidity, which are suitable to rigidly mutually support the dragging mechanism and the melter body, also when the use of a support bracket is avoided.

The spacer member 60 defines an inner conduit 66 therein, extending between the first end 61 and the second end 62, suitable to make the solid glue wire 30 to pass therein.

In accordance with an embodiment, the inner conduit 66 of the spacer member 60 is rectilinear or substantially rectilinear.

In accordance with an embodiment, the inner passage 47, 48 of the dragging mechanism, the inner conduit 66 of the spacer member 60, and the inner passage 21 of the melter body 20, form together a single continuous conduit, particularly substantially rectilinear.

According to an embodiment the spacer member 60 is made of Teflon, or a ceramic material.

In accordance with an embodiment, the spacer member 60 is connected to the melter body 20 by a first bushing 64, and to the dragging mechanism 40 by a second bushing 63.

For example, each of such bushings 63, 64 comprises a cup portion suitable to receive therein a corresponding end 61, 62 of the spacer member 60.

Each of such bushings 63, 64 can comprise a threaded portion which is suitable to engage into a threaded hole at the outlet 42 of the dragging mechanism and at the inlet 22 of the melter body 20 respectively.

Each bushing 63, 64 comprises a central through hole 63' which connects, , the inner passage 48 of the dragging mechanism 40, and the inner passage 21 of the melter body 20, to the inner conduit 66 of the spacer member 60, by continuity of shape.

In accordance with an embodiment, the inner diameter of the inner passage 47, 48 of the dragging mechanism 40 is substantially equal to the inner diameter of the inner conduit 66, in particular equal to the diameter of the hole 63' of the bushing 63.

In accordance with an embodiment, the bushings 63 and 64 form a seal between the spacer member 60 and the dragging mechanism 40 and the melter body 20, respectively.

In accordance with an embodiment, the dragging mechanism 40 comprises at least one pair of rollers comprising a driving roller 44 and a driven roller 43, which are arranged with their rotational axes 38, 39 mutually parallel and operatively pressing one against the other in a direction orthogonal to such rotational axes 38, 39.

The pair of rollers 43, 44 is suitable to operatively receive the solid glue wire 30 in an interposed manner between the driving roller 44 and the driven roller 43 in order to drag said solid glue wire 30 by the rotation of said pair of rollers.

In accordance with an embodiment, the dragging mechanism 40 comprises a motor 75, for example a gearmotor comprising a motor 75 and gear 76, having a rotary shaft 77 mechanically connected to the driving roller 44 so as to bring it to rotate. The motor 75 is for example an electric motor, for example, a brushless motor, or for example a three-phase motor. Alternatively, the motor 75 can be a pneumatic or hydraulic motor.

In accordance with an embodiment, the motor 75 or the gearmotor is directly or indirectly secured to the connection structure 10.

In accordance with an embodiment, the driving roller 44 comprises a driving wheel 44' coaxial with and integral to the driving roller 44, and the driven roller 43 comprises a driven wheel 43' integral to and coaxial with the driven roller 43, in which the driving wheel 44' and the driven wheel 43' are configured and arranged so that the driving wheel 44' transmits the motion to the driven wheel 43'. For example, the driving wheel 44' and the driven wheel 43' are cogwheels configured so as to transmit the motion even if the distance between the rotational axes changes slightly.

In accordance with an embodiment, both the driving roller 44 and the driven roller 43 have a shaped profile 44", 43" able to transmit to the interposed solid glue wire 30 a static friction force which is sufficient to drag such solid glue wire 30, for example, such shaped profile 44", 43" is an outwardly concave section, for example semicircular.

In accordance with an embodiment, the dragging mechanism 40 comprises an inlet guide member 45 having an inner conduit 47 suitable to be passed through by the solid glue wire 30, in which such inner conduit 47 proceeds from the inlet 41 of the dragging mechanism up to an outlet end portion 49' arranged in the proximity of the pair of rollers 43, 44 so as to drive the solid glue wire 30 entering said pair of rollers 43, 44 in a guided manner. The inner conduit 47 is a part of the inner passage 47, 48 of the dragging mechanism 40.

In accordance with an embodiment, the dragging mechanism 40 comprises an outlet guide member 46 having an inner conduit 48, suitable to be passed through by said solid glue wire 30, in which such inner conduit 48 proceeds from an end portion 49" arranged in the proximity of said pair of rollers 43, 44 so as to receive said solid glue wire 30 exiting from said pair of rollers 43, 44, up to the outlet 42 of the dragging mechanism 40. The inner conduit 48 is a part of the inner passage 47, 48 of the dragging mechanism 40.

In other terms, the inlet guide member 45 and/or the outlet guide member 46 are configured so as to precisely drive the solid glue wire 30 between the driving 44 and driven 43 rollers, particularly at the shaped profiles 44", 43".

In accordance with an embodiment, the dragging mechanism 40 comprises an adjuster 80 of the force exerted between the driving roller 44 and the driven roller 43.

The adjuster 80 comprises, for example, means for varying the distance between the axes 38, 39 of the driving roller 44 and the driven roller 43.

In accordance with an embodiment, the means for varying the distance comprise a roller-holding member 37, rotatably supporting one of the driving roller 44 and the driven roller 43, in which the roller-holding member 37 is hinged, at a first end thereof, to a fixed base 81 of the dragging mechanism 40, about a hinge axis 36 substantially parallel to the axes 38, 39 of the driving roller 44 and the driven roller 43.

In accordance with an embodiment, the means for varying the distance comprise an adjusting handle 82 that is rotatable about an axis 83 substantially orthogonal to the hinge axis 36 and substantially parallel to a plane passing through the axes 38, 39 of the driving roller 44 and the driven roller 43, so that, by screwing or unscrewing the adjusting handle 82, the distance between the axes 38, 39 of the driving roller 44 and the driven roller 43 is decreased or increased, respectively.

In accordance with an embodiment, the dispenser device 1 comprises a dispensing nozzle 70 mounted directly to the melter body 20 at the outlet 23 of the melter body 20.

In an alternative embodiment, a different type of dragging mechanism 40 can be provided, for example comprising a linear actuator, not shown in the figures, to drag the solid glue wire according to an alternate motion.

In accordance with the invention, the dispenser device 1 comprises an opening/closure valve 90 of the flow of melt glue wire through the dispensing nozzle 70.

Such opening/closure valve 90 is a needle valve, having a pin which, in a first position closes the exiting flow of the melt glue and, in a second position prevents the flow of melt glue, for example, having an electromagnetic or pneumatic actuation.

Such valve 90 is mounted to the melter body 20 so that the pin 91 is aligned with the outlet hole of the nozzle 70.

In accordance with an embodiment, the nozzle 70 has a melt glue outlet hole having a transversal circular or elliptical, or polygonal, or star-shaped section.

In accordance with an embodiment, the nozzle 70 has an outlet hole with a transversally elongated section or transversal slit. Such nozzle is capable of providing a melt glue wire having a flattened ribbon shape, to distribute for example a glue band on a piece to be glued.

In accordance with an embodiment, downstream of the nozzle 70 with respect to the relative motion between the nozzle and a piece to be glued, a spatula is provided, to spread the dispensed glue wire.

In accordance with an embodiment, the dispenser device comprises a temperature sensor 73 in thermal contact with the melter body 20 to detect the temperature of the inner passage 21 of the melter body 20.

In accordance with an embodiment, the motor 75 comprises means to adjust the rotational speed of the motor, for example, an electronic inverter.

In accordance with an embodiment, the dispenser device comprises a control unit functionally connected to said means to adjust the rotational speed of the motor 75 and connected to said temperature sensor 73, said control unit being configured to adjust the advancement speed of the solid glue wire 30 as a function of the temperature of the melter body, in order to obtain an optimal dispensing.

In accordance with an embodiment, the control unit is functionally connected also to said heater members, so as to change the temperature of the melter body to obtain an optimal dispensing.

In accordance with an embodiment, the control unit is functionally connected to the opening/closure valve 90 to start/stop the flow of melt glue dispensed as a function of the gluing needs.

In accordance with an embodiment, the control unit is mounded on board of said dispenser device.

Alternatively, the control unit is implemented on an external machine to which the dispenser device is mounted. In such a case, the dispenser device comprises a plurality of connectors for interfacing with such external machine.

In accordance with the invention, the connection structure between the dragging mechanism 40 and the melter body 20 comprises a structural bracket 10 on which the melter body 20 and the dragging mechanism 40 are secured rigidly.

In accordance with the invention, the structural bracket 10 is mountable to a fixed portion or a mobile portion of a gluing machine.

In accordance with another embodiment, the connection structure between the dragging mechanism 40 and the melter body 20 is formed by the spacer member 60 itself, and such spacer member 60 is configured to rigidly and structurally support the melter body 20 with respect to the dragging mechanism 40, avoiding a structural bracket 10 to rigidly mutually connect the melter body 20 and the dragging mechanism 40.

In other terms, in such embodiment, the spacer member 60 has a structural support function, forming a light-weighted and compact structure.

According to another aspect, the present invention relates to a hot melt gluing machine 100 for dispensing a continuous or interrupted melt glue wire, starting from a continuous solid glue wire 30.

Such a machine comprises at least one dispenser device 1 as described above and a basement 101 comprising a support portion 103 to support the dispenser device 1.

In accordance with an embodiment, the machine comprises a support structure 102 suitable to support a reel 101 on which said solid glue wire 30 is wound.

In accordance with an embodiment, such machine comprises a workpiece table suitable to hold a piece on which the melt glue has to be dispensed by the dispenser device 1, and handling means suitable to generate a relative movement between the dispenser device 1 and the workpiece table.

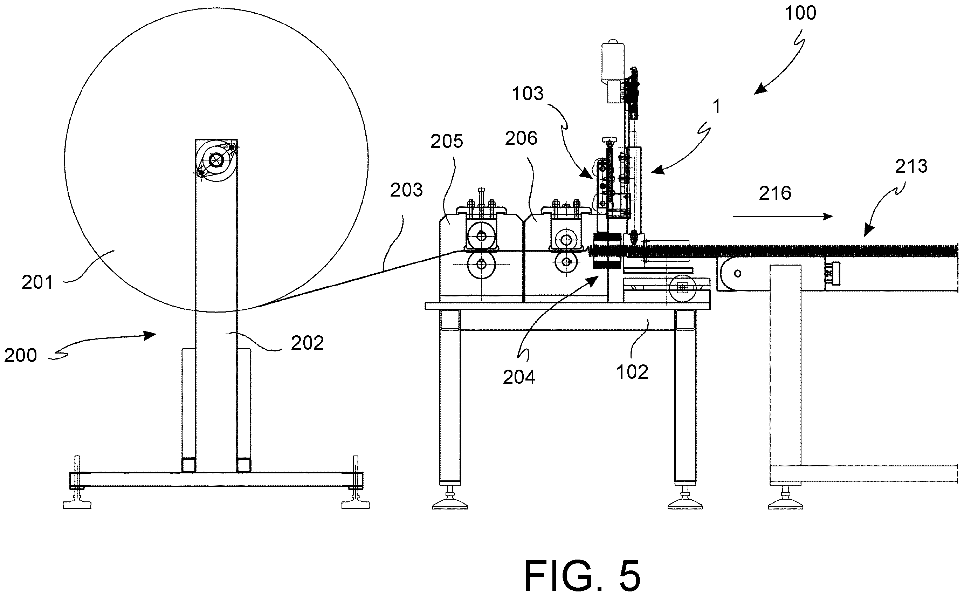

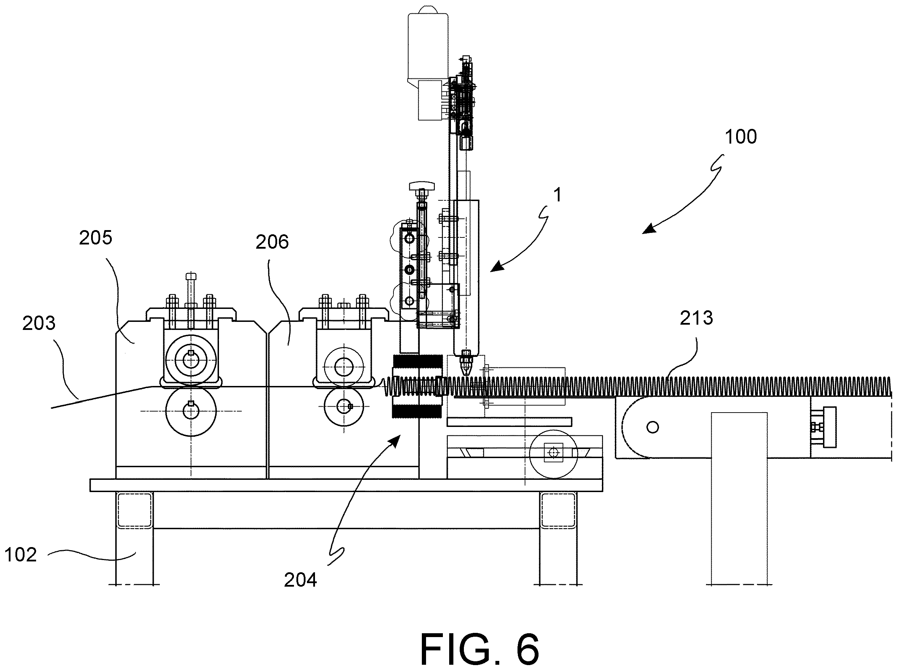

In Figures 5 to 8, an example of a hot melt gluing machine 100 for dispensing a melt glue wire according to the invention is shown, comprising at least one dispenser device 1 as described above.

In the specific case, such machine 100 is a machine to produce a filter for filtering a fluid flow when such fluid passes therethrough.

A band of filtering media 203 is wound in a coil 201 of filtering media. Such coil is, for example, mounted on a support 202 of a support structure 200.

An end of the band of filtering media is dragged on a worktop of a pleating machine 100, on which at least one motorized marker roller is mounted to obtain a folding line on the filtering media in a direction transversal to the advancement direction of the filtering media 203.

Downstream of the motorized marker roller 205, a driven roller 206 can be present.

Downstream of the driven roller, a pair of forming screws 204 to form the fold is provided, which are suitable to form the folding itself in order to obtain the pleated filtering media 213.

Downstream the forming screws 204, at least one dispenser device 1 as described above is mounted, which dispenses a wire of glue which is arranged on the ridges of the pleated media 213 in the advancement direction of the pleated media itself, particularly in the direction and sense indicated with 216.

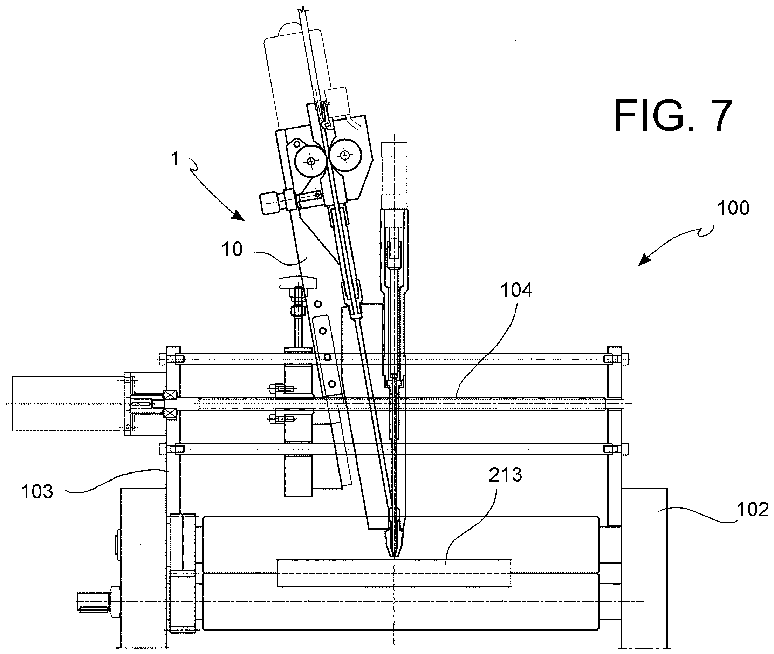

The Fig. 7 shows a transversal view of the machine 100, comprising translation means of the dispenser device in a transversal direction with respect to the advancement of the pleated media 213.

Such translation means comprise an endless screw 104 supported by a frame forming the arm 103 to which the dispenser device 1 is mounted.

More than one dispenser device can be easily mounted in the gluing machine 100.

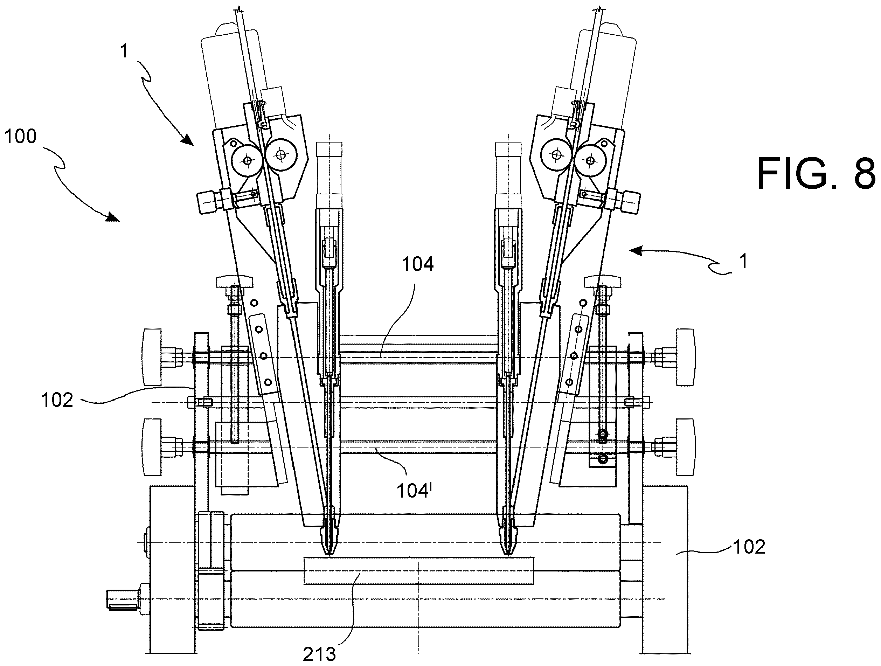

In fact, as shown in Fig. 8, the machine 100 comprises two dispenser devices slidably mounted to the machine in order to slide in a transversal direction with respect to the advancement direction of the pleated media.

The dispenser module 1 according to the present invention can be mounted on any support structure, for example built with modular members which are assembled together to form any desired configuration.

The dispenser module 1, alternatively to the use to stabilize the ridges of a filtering media, can be used for many other applications, for example to glue paper, for example by limiting the distribution of the glue to edges to be glued.

To the embodiments of the device described above, those skilled in the art, in order to meet contingent needs, will be able to make modifications, adaptations and replacements of elements with functionally equivalent other ones, without for this departing from the scope of the following claims. Each of the features described as belonging to a possible embodiment can be implemented independently from the other embodiments described.

## Claims

1. A hot melt glue dispenser device (1) for dispensing a continuous or interrupted melt glue wire starting from a solid glue wire (30) that is fed in input to said dispenser device, comprising:
- a melter body (20) comprising an inner passage (21) having an inlet (22) for said solid glue wire (30), and an opposite outlet (23) for said melt glue wire, said melter body (20) having heater members to melt the solid glue wire (30) along the path between said inlet (22) and said outlet (23);
- a dragging mechanism (40) comprising an inner passage (47, 48) having an inlet (41) and an outlet (42) for said solid glue wire (30), said dragging mechanism being suitable to apply a dragging force to said solid glue wire (30) to transport said solid glue wire (30) from said inlet (41) to said outlet (42) through said inner passage (47,48);
- a spacer member (60) interposed between said melter body (20) and said dragging mechanism (40), defining an inner conduit (66) suitable to make the solid glue wire (30) to pass therein between the outlet (42) of the dragging mechanism and the inlet (22) of the melter body (20), said spacer member (60) having a first end (61) connected to said outlet (42) of the dragging mechanism (40) and a second end (62) connected to said inlet (22) of the melter body (20);
- said spacer member (60) being made of a thermally insulating material so as to prevent the heat transferring from the melter body (20) to the dragging mechanism (40);
- a connection structure to which both said melter body (20) and said dragging mechanism (40) are secured, said connection structure being configured to prevent a relative movement between said dragging mechanism (40) and said melter body (20), and vice versa, the connection structure between the dragging mechanism (40) and the melter body (20) comprising a structural bracket (10) on which the melter body (20) and the dragging mechanism (40) are rigidly secured, said structural bracket (10) being configured to be mountable to a fixed portion or a mobile portion of a gluing machine;
the connection structure allowing the entire dispenser device to be a single, independent and self-standing, autonomous, compact, easily maneuverable, replaceable, storable assembly, and which is applicable to any machine having a hold portion on which it can be mounted;
- a dispensing nozzle (70) mounted directly to the melter body (20) at the outlet (23) of the melter body (20);
- an opening/closure valve (90) of the flow of melt glue wire through the dispensing nozzle (70); such opening/closure valve (90) being a needle valve, having a pin (91) which, in a first position closes the exiting flow of the melt glue and, in a second position opens the exiting flow of melt glue; such valve (90) being mounted to the melter body (20) so that the pin (91) is aligned with the outlet hole of the nozzle (70), and passes through a pin passage inside the melter body (20), said pin passage being partially different from said inner passage (21), and being in communication with the inner passage (21) exclusively at the outlet (23) of the melter body (20).

2. The dispenser device according to claim 1, wherein the inner passage (47, 48) of the dragging mechanism (40), the inner conduit (66) of the spacer member (60), and the inner passage (21) of the melter body (20), form together a single continuous conduit, in particular substantially rectilinear.

3. The dispenser device according to claim 1 or 2, wherein said dragging mechanism (40) comprises at least one pair of rollers comprising a driving roller (44) and a driven roller (43) arranged with rotational axes (38, 39) that are mutually parallel and operatively pressing one against the other in an orthogonal direction to said rotational axes (38, 39), said pair of rollers (43, 44) being suitable to operatively receive said solid glue wire (30) in an interposed manner between said driving roller (44) and said driven roller (43) in order to drag said solid glue wire (30) by the rotation of said pair of rollers.

4. The dispenser device according to claim 3, wherein said dragging mechanism (40) comprises an inlet guide member (45) having an inner conduit (47) forming a first portion of said inner passage (47, 48), said inner conduit (47) proceeding from said inlet (41) of the dragging mechanism up to an outlet end portion (49') arranged in the proximity of said pair of rollers (43, 44) so as to drive in a guided manner the solid glue wire (30) entering said pair of rollers (43, 44), and/or
wherein said dragging mechanism (40) comprises an outlet guide member (46) having an inner conduit (48) forming a second portion of said inner passage (47, 48), said inner conduit (48) proceeding from an end portion (49") arranged in the proximity of said pair of rollers (43, 44) in order to receive said solid glue wire (30) exiting from said pair of rollers (43, 44), up to said outlet (42) of the dragging mechanism (40).

5. The dispenser device according to at least one of the claims 3 or 4, wherein said dragging mechanism (40) comprises an adjuster (80) of the force exerted between the driving roller (44) and the driven roller (43), said adjuster (80) comprising means for varying the distance between the axes (38, 39) of said driving roller (44) and said driven roller (43).

6. The dispenser device according to claim 5, wherein said means for varying the distance comprise:
- a roller-holding member(37), rotatably supporting one of said driving roller (44) and said driven roller (43), said roller-holding member (37) being hinged, at a first end thereof, to a fixed base (81) of the dragging mechanism (40), about a hinge axis (36) substantially parallel to the axes (38, 39) of said driving roller (44) and said driven roller (43);
- an adjusting handle (82) that is rotatable about an axis (83) substantially orthogonal to the hinge axis (36) and substantially parallel to a plane passing through the axes (38, 39) of said driving roller (44) and said driven roller (43), so that, by screwing or unscrewing said adjusting handle (82) the distance between the axes (38, 39) of said driving roller (44) and said driven roller (43) is decreased or increased, respectively.

7. The dispenser device according to any of the claims 3 to 6, wherein the dragging mechanism (40) comprises a motor (75) having a rotary shaft (77) mechanically connected to the driving roller (44) so as to bring it to rotate, and wherein the dispenser device comprises a temperature sensor (73) in thermal contact with the melter body (20) to detect the temperature of the inner passage (21) of the melter body (20), the dispensed device comprising a control unit functionally connected to said means to adjust the rotational speed of the motor (75) and connected to said temperature sensor (73), said control unit being configured to adjust the advancement speed of the solid glue wire (30) as a function of the temperature of the melter body, in order to obtain an optimal dispensing.

8. The dispenser device according to claim 7, wherein the control unit is functionally connected also to said heater members, so as to change the temperature of the melter body to obtain an optimal dispensing, and/or
the control unit is functionally connected to the opening/closure valve 90 to start/stop the flow of melt glue dispensed as a function of gluing needs.

9. The dispenser device according to claim 7 or 8, wherein the control unit is mounded on board of said dispenser device, or wherein the control unit is implemented on an external machine to which the dispenser device is mounted. In such a case, the dispenser device comprises a plurality of connectors for interfacing with such external machine.

10. A hot melt gluing machine (100) for dispensing a continuous or interrupted melt glue wire starting from a solid glue wire (30), comprising:
- at least one dispenser device (1) according to any of the preceding claims;
- a basement (101) comprising a support portion (103) to support said at least one dispenser device (1);
- a workpiece table suitable to hold a piece on which the melt glue has to be dispensed by said at least one dispenser device (1);
- handling means suitable to generate a relative movement between said at least one dispenser device (1) and said workpiece table.

## Patentansprüche

1. Abgabevorrichtung für heißgeschmolzenen Klebstoff (1) zum Abgeben eines kontinuierlichen oder unterbrochenen geschmolzenen Klebstofffadens, beginnend von einem festen Klebstofffaden (30), welcher in Eingabe der Abgabevorrichtung zugeführt wird, umfassend:
- einen Schmelzkörper (20), umfassend einen inneren Durchgang (21), welcher einen Einlass (22) für den festen Klebstoffaden (30) und einen entgegengesetzten Auslass (23) für den geschmolzenen Klebstofffaden aufweist, wobei der Schmelzkörper (20) Heizelemente zum Schmelzen des festen Klebstofffadens (30) entlang des Pfads zwischen dem Einlass (22) und dem Auslass (23) aufweist;
- einen Zugmechanismus (40), umfassend einen inneren Durchgang (47, 48), welcher einen Einlass (41) und einen Auslass (42) für den festen Klebstofffaden (30) aufweist, wobei der Zugmechanismus dazu geeignet ist, eine Zugkraft auf den festen Klebstofffaden (30) auszuüben, um den festen Klebstofffaden (30) von dem Einlass (41) zu dem Auslass (42) durch den inneren Durchgang (47, 48) zu transportieren;
- ein Abstandselement (60), welches zwischen dem Schmelzkörper (20) und dem Zugmechanismus (40) eingefügt ist, wobei eine innere Leitung (66) definiert ist, welche dazu geeignet ist, den festen Klebstoffaden (30) dazu zu veranlassen, darin zwischen dem Auslass (42) des Zugmechanismus und dem Einlass (22) des Schmelzkörpers (20) hindurchzutreten, wobei das Abstandselement (60) ein erstes mit dem Auslass (42) des Zugmechanismus (40) verbundenes Ende (61) und ein mit dem Einlass (22) des Schmelzkörpers (20) verbundenes zweites Ende (62) aufweist;
- wobei das Abstandselement (60) aus einem thermisch isolierenden Material hergestellt ist, um so die Wärmeübertragung von dem Schmelzkörper (20) zu dem Zugmechanismus (40) zu verhindern;
- eine Verbindungsstruktur, an welche sowohl der Schmelzkörper (20) als auch der Zugmechanismus (40) gesichert sind, wobei die Verbindungsstruktur dazu eingerichtet ist, eine Relativbewegung zwischen dem Zugmechanismus (40) und dem Schmelzkörper (20) und umgekehrt zu verhindern, wobei die Verbindungsstruktur zwischen dem Zugmechanismus (40) und dem Schmelzkörper (20) eine strukturelle Halterung (10) umfasst, an welcher der Schmelzkörper (20) und der Zugmechanismus (40) fest gesichert sind, wobei die strukturelle Halterung (10) dazu eingerichtet ist, an einem festen Abschnitt oder einem beweglichen Abschnitt einer Klebemaschine montierbar zu sein;
wobei die Verbindungsstruktur es der gesamten Abgabevorrichtung erlaubt, eine einzelne, unabhängige und selbständige, autonome, kompakte, leicht manövrierbare, ersetzbare, lagerbare Anordnung zu sein, und welche auf eine beliebige Maschine anwendbar ist, welche einen Halteabschnitt aufweist, an welchem sie montiert werden kann;
- eine Abgabedüse (70), welche direkt an dem Schmelzkörper (20) an dem Auslass (23) des Schmelzkörpers (20) montiert ist;
- ein Öffnungs-/Schließventil (90) für den Strom von geschmolzenem Klebstoffaden durch die Abgabedüse (70); wobei das Öffnungs-/Schließventil (90) ein Nadelventil ist, welches einen Stift (91) aufweist, welcher in einer ersten Position den austretenden Strom des geschmolzenen Klebstoffs abschließt und in einer zweiten Position den austretenden Strom von geschmolzenem Klebstoff öffnet; wobei das Ventil (90) an dem Schmelzkörper (20) montiert ist, so dass der Stift (91) mit dem Auslassloch der Düse (70) ausgerichtet ist und durch einen Stiftdurchgang innerhalb des Schmelzkörpers (20) hindurchtritt, wobei der Stiftdurchgang teilweise verschieden von dem inneren Durchgang (21) ist und lediglich an dem Auslass (23) des Schmelzkörpers (20) mit dem inneren Durchgang (21) in Kommunikation steht.

2. Abgabevorrichtung nach Anspruch 1, wobei der innere Durchgang (47, 48) des Zugmechanismus (40), die innere Leitung (66) des Abstandselements (60) und der innere Durchgang (21) des Schmelzkörpers (20) gemeinsam eine einzelne kontinuierliche Leitung bilden, insbesondere im Wesentlichen geradlinig.

3. Abgabevorrichtung nach Anspruch 1 oder 2, wobei der Zugmechanismus (40) wenigstens ein Paar von Rollen umfasst, welches eine Antriebsrolle (44) und eine Abtriebsrolle (43) umfasst, welche mit Rotationsachsen (38, 39) angeordnet sind, welche zueinander parallel sind, und betriebsmäßig in einer orthogonalen Richtung zu den Rotationsachsen (38, 39) gegeneinander drücken, wobei das Paar von Rollen (43, 44) dazu geeignet ist, den festen Klebstoffaden (30) in einer zwischen der Antriebsrolle (44) und der Abtriebsrolle (43) eingefügten Weise betriebsmäßig aufzunehmen, um den festen Klebstofffaden (30) durch die Rotation des Paars von Rollen zu ziehen.

4. Abgabevorrichtung nach Anspruch 3, wobei der Zugmechanismus (40) ein Einlass-Führungselement (34) umfasst, welches eine innere Leitung (47) aufweist, welche einen ersten Abschnitt des inneren Durchgangs (47, 48) bildet, wobei sich der innere Durchgang (47) von dem Einlass (41) des Zugmechanismus bis zu einem Auslass-Endabschnitt (49') fortsetzt, welcher in der Nähe des Paars von Rollen (43, 44) angeordnet ist, um so in einer geführten Weise den festen Klebstofffaden (30) anzutreiben, welcher in das Paar von Rollen (43, 44) eintritt, und/oder
wobei der Zugmechanismus (40) ein Auslass-Führungselement (46) umfasst, welches eine innere Leitung (48) aufweist, welche einen zweiten Abschnitt des inneren Durchgangs (47, 48) bildet, wobei sich die innere Leitung (48) von einem in der Nähe des Paars von Rollen (43, 44) angeordneten Endabschnitt (49") zum Aufnehmen des festen Klebstofffadens (30), welcher von dem Paar von Rollen (43, 44) austritt, bis zu dem Auslass (42) des Zugmechanismus (40) fortsetzt.

5. Abgabevorrichtung nach wenigstens einem der Ansprüche 3 oder 4, wobei der Zugmechanismus (40) ein Anpassungselement (80) für die zwischen der Antriebsrolle (44) und der Abtriebsrolle (43) ausgeübte Kraft umfasst, wobei das Anpassungselement (80) Mittel zum Variieren der Distanz zwischen den Achsen (38, 39) der Antriebsrolle (44) und der Abtriebsrolle (43) umfasst.

6. Abgabevorrichtung nach Anspruch 5, wobei die Mittel zum Variieren der Distanz umfassen:
- ein Rollen-Halteelement (37), welches eine aus der Antriebsrolle (44) und der Abtriebsrolle (43) rotierbar trägt, wobei das Rollen-Halteelement (37) an einem ersten Ende davon an einer festen Basis (81) des Zugmechanismus (40) um eine Gelenkachse (36) angelenkt ist, welche im Wesentlichen parallel zu den Achsen (38, 39) der Antriebsrolle (44) und der Abtriebsrolle (43) ist;
- einen Anpassungsgriff (82), welcher um eine Achse (83) rotierbar ist, welche im Wesentlichen orthogonal zu der Gelenkachse (36) und im Wesentlichen parallel zu einer Ebene ist, welche durch die Achsen (38, 39) der Antriebsrolle (44) und der Abtriebsrolle (43) hindurchtritt, so dass durch Anschrauben oder Abschrauben des Anpassungsgriffs (82) die Distanz zwischen den Achsen (38, 39) der Antriebsrolle (44) und der Abtriebsrolle (43) verringert bzw. vergrößert wird.

7. Abgabevorrichtung nach einem der Ansprüche 3 bis 6, wobei der Zugmechanismus (40) einen Motor (75) umfasst, welcher eine Rotationswelle (77) aufweist, welche mechanisch mit der Antriebsrolle (44) verbunden ist, um sie dazu zu bringen, zu rotieren, und wobei die Abgabevorrichtung einen Temperatursensor (73) in thermischem Kontakt mit dem Schmelzkörper (20) umfasst, um die Temperatur des inneren Durchgangs (21) des Schmelzkörpers (20) zu detektieren, wobei die Abgabevorrichtung eine Steuereinheit umfasst, welche funktionell mit den Mitteln zum Anpassen der Rotationsgeschwindigkeit des Motors (75) verbunden ist und mit dem Temperatursensor (73) verbunden ist, wobei die Steuereinheit dazu eingerichtet ist, die Vorschubgeschwindigkeit des festen Klebstofffadens (30) als eine Funktion der Temperatur des Schmelzkörpers anzupassen, um eine optimale Abgabe zu erreichen.

8. Abgabevorrichtung nach Anspruch 7, wobei die Steuereinheit funktionell ebenfalls mit den Heizelementen verbunden ist, um so die Temperatur des Schmelzkörpers zu ändern, um eine optimale Abgabe zu erreichen, und/oder die Steuereinheit funktionell mit dem Öffnungs-/Schließventil (90) verbunden ist, um den Strom des geschmolzenen Klebstoffs zu starten/stoppen, welcher als eine Funktion von Klebeanforderungen abgegeben wird.

9. Abgabevorrichtung nach Anspruch 7 oder 8, wobei die Steuereinheit an Bord der Abgabevorrichtung montiert ist oder wobei die Steuereinheit an einer externen Maschine implementiert ist, an welcher die Abgabevorrichtung montiert ist. In einem solchen Fall umfasst die Abgabevorrichtung eine Mehrzahl von Verbindungselementen zum Koppeln mit einer solchen externen Maschine.

10. Maschine zum heißschmelzenden Kleben (100) zum Abgeben eines kontinuierlichen oder unterbrochenen geschmolzenen Klebstofffadens, beginnend von einem festen Klebstofffaden (30), umfassend:
- wenigstens eine Abgabevorrichtung (1) nach einem der vorhergehenden Ansprüche;
- ein Fundament (101), welches einen Trageabschnitt (103) zum Tragen der wenigstens einen Abgabevorrichtung (1) umfasst;
- einen Arbeitsstück-Tisch, welcher dazu geeignet ist, ein Stück zu halten, auf welchem der geschmolzene Klebstoff durch die wenigstens eine Abgabevorrichtung (1) abzugeben ist;
- Handhabungsmittel, welche geeignet sind, eine Relativbewegung zwischen der wenigstens einen Abgabevorrichtung (1) und dem Arbeitsstück-Tisch zu erzeugen.

## Revendications

1. Distributeur d'adhésif chaud (1) pour la distribution d'un fil d'adhésif chaud continu ou interrompu partant d'un fil d'adhésif solide (30) qui est alimenté en entrée audit distributeur, comprenant :
- un corps de fusion (20) comprenant un passage intérieur (21) ayant une entrée (22) pour ledit fil d'adhésif solide (30), et une sortie opposée (23) pour ledit fil d'adhésif chaud, ledit corps de fusion (20) ayant des éléments chauffants pour faire fondre le fil d'adhésif solide (30) le long du trajet entre ladite entrée (22) et ladite sortie (23) ;
- un mécanisme d'entraînement (40) comprenant un passage intérieur (47, 48) ayant une entrée (41) et une sortie (42) pour ledit fil d'adhésif solide (30), ledit mécanisme d'entraînement étant adapté pour appliquer une force d'entraînement audit fil d'adhésif solide (30) pour transporter ledit fil d'adhésif solide (30) de ladite entrée (41) à ladite sortie (42) à travers ledit passage intérieur (47, 48) ;
- un élément d'espacement (60) interposé entre ledit corps de fusion (20) et ledit mécanisme d'entraînement (40), définissant un conduit intérieur (66) adapté pour faire passer le fil d'adhésif solide (30) à l'intérieur entre la sortie (42) du mécanisme d'entraînement et l'entrée (22) du corps de fusion (20), ledit élément d'espacement (60) ayant une première extrémité (61) reliée à ladite sortie (42) du mécanisme d'entraînement (40) et une deuxième extrémité (62) reliée à ladite entrée (22) du corps de fusion (20) ;
- ledit élément d'espacement (60) étant réalisé en un matériau thermo-isolant de façon à empêcher le transfert de chaleur du corps de fusion (20) au mécanisme d'entraînement (40) ;
- une structure de liaison à laquelle à la fois ledit corps de fusion (20) et ledit mécanisme d'entraînement (40) sont fixés, ladite structure de liaison étant configurée pour empêcher un mouvement relatif entre ledit mécanisme d'entraînement (40) et ledit corps de fusion (20), et inversement, la structure de liaison entre le mécanisme d'entraînement (40) et le corps de fusion (20) comprenant un support structurel (10) sur lequel le corps de fusion (20) et le mécanisme d'entraînement (40) sont fixés rigidement, ledit support structurel (10) étant configuré pour pouvoir être monté sur une portion fixe ou une portion mobile d'une machine de collage ;
la structure de liaison permettant à l'ensemble du distributeur d'être un assemblage unique, indépendant et autoporté, autonome, compact, facile à manoeuvrer, remplaçable, stockable, et qui est applicable à n'importe quelle machine ayant une portion de retenue sur laquelle elle peut être montée ;
- une buse de distribution (70) montée directement sur le corps de fusion (20) au niveau de la sortie (23) du corps de fusion (20) ;
- une valve d'ouverture/fermeture (90) du flux de fil d'adhésif chaud à travers la buse de distribution (70) ; une telle valve d'ouverture/fermeture (90) étant une valve à aiguille, ayant une broche (91) qui, dans une première position ferme le flux sortant de l'adhésif chaud et, dans une deuxième position ouvre le flux sortant d'adhésif chaud ; une telle valve (90) étant montée sur le corps de fusion (20) de sorte que la broche (91) est alignée sur le trou de sortie de la buse (70), et passe à travers un passage de broche à l'intérieur du corps de fusion (20), ledit passage de broche étant partiellement différent dudit passage intérieur (21), et étant en communication avec le passage intérieur (21) exclusivement au niveau de la sortie (23) du corps de fusion (20).

2. Distributeur selon la revendication 1, dans lequel le passage intérieur (47, 48) du mécanisme d'entraînement (40), le conduit intérieur (66) de l'élément d'espacement (60), et le passage intérieur (21) du corps de fusion (20), forment ensemble un seul conduit continu, en particulier sensiblement rectiligne.

3. Distributeur selon la revendication 1 ou 2, dans lequel ledit mécanisme d'entraînement (40) comprend au moins une paire de rouleaux comprenant un rouleau d'entraînement (44) et un rouleau entraîné (43) agencés avec des axes de rotation (38, 39) qui sont mutuellement parallèles et pressant opérationnellement l'un contre l'autre dans une direction orthogonale auxdits axes de rotation (38, 39), ladite paire de rouleaux (43, 44) étant adaptée pour recevoir opérationnellement ledit fil d'adhésif solide (30) d'une manière interposée entre ledit rouleau d'entraînement (44) et ledit rouleau entraîné (43) afin d'entraîner ledit fil d'adhésif solide (30) par la rotation de ladite paire de rouleaux.

4. Distributeur selon la revendication 3, dans lequel ledit mécanisme d'entraînement (40) comprend un élément de guidage d'entrée (45) ayant un conduit intérieur (47) formant une première portion dudit passage intérieur (47, 48), ledit conduit intérieur (7) allant de ladite entrée (41) du mécanisme d'entraînement jusqu'à une portion d'extrémité de sortie (49') agencée à proximité de ladite paire de rouleaux (43, 44) de façon à entraîner de manière guidée le fil d'adhésif solide (30) pénétrant dans ladite paire de rouleaux (43, 44), et/ou
dans lequel ledit mécanisme d'entraînement (40) comprend un élément de guidage de sortie (46) ayant un conduit intérieur (48) formant une deuxième portion dudit passage intérieur (47, 48), ledit conduit intérieur (48) allant d'une portion d'extrémité (49") agencée à proximité de ladite paire de rouleaux (43, 44) afin de recevoir ledit fil d'adhésif solide (30) sortant de ladite paire de rouleaux (43, 44), jusqu'à ladite sortie (42) du mécanisme d'entraînement (40).

5. Distributeur selon au moins l'une des revendications 3 ou 4, dans lequel ledit mécanisme d'entraînement (40) comprend un dispositif de réglage (80) de la force exercée entre le rouleau d'entraînement (44) et le rouleau entraîné (43), ledit dispositif de réglage (80) comprenant un moyen de variation de la distance entre les axes (38, 39) dudit rouleau d'entraînement (44) et dudit rouleau entraîné (43).

6. Distributeur selon la revendication 5, dans lequel ledit moyen de variation de la distance comprend :
- un élément porte-rouleau (37), supportant en rotation un parmi ledit rouleau d'entraînement (44) et ledit rouleau entraîné (43), ledit élément porte-rouleau (37) étant articulé, à une première extrémité de celui-ci, à une base fixe (81) du mécanisme d'entraînement (40), autour d'un axe d'articulation (36) sensiblement parallèle aux axes (38, 39) dudit rouleau d'entrainement (44) et dudit rouleau entraîné (43) ;
- une poignée de réglage (82) qui est rotative autour d'un axe (83) sensiblement orthogonal à l'axe d'articulation (36) et sensiblement parallèle à un plan passant par les axes (38, 39) dudit rouleau d'entraînement (44) et dudit rouleau entraîné (43), de sorte que, lors du vissage ou dévissage de ladite poignée de réglage (82), la distance entre les axes (38, 39) dudit rouleau d'entraînement (44) et dudit rouleau entraîné (43) est diminuée ou augmentée, respectivement.

7. Distributeur selon l'une quelconque des revendications 3 à 6, dans lequel le mécanisme d'entraînement (40) comprend un moteur (75) ayant un arbre rotatif (77) relié mécaniquement au rouleau d'entraînement (44) de façon à l'amener à tourner, et dans lequel le distributeur comprend un capteur de température (73) en contact thermique avec le corps de fusion (20) pour détecter la température du passage intérieur (21) du corps de fusion (20), le dispositif distribué comprenant une unité de commande reliée fonctionnellement audit moyen pour régler la vitesse de rotation du moteur (75) et reliée audit capteur de température (73), ladite unité de commande étant configurée pour régler la vitesse de progression du fil d'adhésif solide (30) en fonction de la température du corps de fusion, afin d'obtenir une distribution optimale.

8. Distributeur selon la revendication 7, dans lequel l'unité de commande est fonctionnellement reliée également auxdits éléments chauffants, de façon à changer la température du corps de fusion pour obtenir une distribution optimale, et/ou
l'unité de commande est reliée fonctionnellement à la valve d'ouverture/fermeture 90 pour démarrer/arrêter le flux de colle chaude distribué en fonction des besoins de collage.

9. Distributeur selon la revendication 7 ou 8, dans lequel l'unité de commande est montée à bord dudit distributeur, ou dans lequel l'unité de commande est mise en oeuvre sur une machine externe sur laquelle le dispositif de distribution est monté. Dans un tel cas, le distributeur comprend une pluralité de connecteurs pour communiquer avec une telle machine externe.

10. Machine de collage à chaud (100) pour la distribution d'un fil d'adhésif chaud continu ou interrompu partant d'un fil d'adhésif solide (30), comprenant :
- au moins un distributeur (1) selon l'une quelconque des revendications précédentes ;
- une base (101) comprenant une portion de support (103) pour supporter ledit au moins un distributeur (1) ;
- un plateau d'usinage adapté pour maintenir une pièce sur laquelle l'adhésif chaud doit être distribué par ledit au moins un distributeur (1) ;
- un moyen de maniement adapté pour générer un mouvement relatif entre ledit au moins un distributeur (1) et ledit plateau d'usinage.
